# EUROPEAN PATENT APPLICATION

(11) **EP 4 725 875 A1**
(43) Date of publication of application: **15.04.2026**
(21) Application number: 25206267.4
(22) Date of filing: 02.10.2025
(51) Int. Cl.: B65H 1/04, B65H 1/14, B65H 7/04, B65H 31/02

(54) **DOCUMENT SHEET CONVEYING DEVICE, IMAGE PROCESSING APPARATUS, AND DOCUMENT SHEET CONVEYING METHOD**

(30) Priority: 09.10.2024 JP 2024177037
(71) Applicant: KYOCERA Document Solutions Inc., Osaka-shi, Osaka 540-8585 (JP)
(72) Inventor: Kadobayashi, Mizue, Osaka-shi, 540-8585 (JP); Ogawa, Shikitaro, Osaka-shi, 540-8585 (JP)
(74) Representative: Plougmann Vingtoft a/s

(57) **Abstract**

A conveying mechanism (3) sequentially conveys document sheets placed on a document sheet placing portion (21) to a document sheet discharge portion (22) through an image reading position at which an image is read from each of the document sheets. The document sheet discharge portion (22) is provided below the document sheet placing portion (21). A raising and lowering mechanism (4) raises and lowers the document sheet placing portion (21). A first determination processing portion (231) determines whether or not any of the document sheets is placed on the document sheet placing portion (21). A second determination processing portion (232) determines whether or not any of the document sheets is placed on the document sheet discharge portion (22). A raising and lowering processing portion (234) controls raising and lowering operations by the raising and lowering mechanism (4) on the basis of results of determinations made by the first determination processing portion (231) and the second determination processing portion (232).

## Description

### INCORPORATION BY REFERENCE

This application is based upon and claims the benefit of priority from the corresponding Japanese Patent Application No. 2024-177037 filed on October 9, 2024, the entire contents of which are incorporated herein by reference.

This disclosure relates to a document sheet conveying device, an image processing apparatus, and a document sheet conveying method.

### BACKGROUND

In general, a document sheet conveying device including a document sheet placing portion and a sheet discharge tray has been known. A document sheet to be conveyed toward an image reading portion is placed on the document sheet placing portion. The sheet discharge tray is provided below the document sheet placing portion. A document sheet from which an image has been read by the image reading portion is discharged to the sheet discharge tray. In addition, this type of document sheet conveying device is provided with a raising and lowering mechanism that raises and lowers the document sheet placing portion. Raising and lowering control is performed on the document sheet placing portion depending on a result obtained by sensing a document sheet placed on the document sheet placing portion in some cases.

### SUMMARY

A document sheet conveying device according to an aspect of this disclosure includes a conveying mechanism, a raising and lowering mechanism, a first determination processing portion, a second determination processing portion, and a raising and lowering processing portion. The conveying mechanism sequentially conveys document sheets placed on a document sheet placing portion to a document sheet discharge portion through an image reading position at which an image is read from each of the document sheets. The document sheet discharge portion is provided below the document sheet placing portion. The raising and lowering mechanism raises and lowers the document sheet placing portion. The first determination processing portion determines whether or not any of the document sheets is placed on the document sheet placing portion. The second determination processing portion determines whether or not any of the document sheets is placed on the document sheet discharge portion. The raising and lowering processing portion controls raising and lowering operations by the raising and lowering mechanism on the basis of results of determinations made by the first determination processing portion and the second determination processing portion.

An image processing apparatus according to another aspect of this disclosure includes the document sheet conveying device, and an image reading portion that reads an image from a document sheet conveyed by the document sheet conveying device.

A document sheet conveying method according to another aspect of this disclosure is a method that is executed by one or more processors which control a document sheet conveying device. The document sheet conveying device includes a conveying mechanism and a raising and lowering mechanism. The conveying mechanism sequentially conveys document sheets placed on a document sheet placing portion to a document sheet discharge portion through an image reading position at which an image is read from each of the document sheets. The document sheet discharge portion is provided below the document sheet placing portion. The raising and lowering mechanism raises and lowers the document sheet placing portion. The document sheet conveying method then includes a first step, a second step, and a third step. In the first step, it is determined whether or not any of the document sheets is placed on the document sheet placing portion. In the second step, it is determined whether or not any of the document sheets is placed on the document sheet discharge portion. In the third step, raising and lowering operations by the raising and lowering mechanism are controlled on the basis of results of determinations made in the first step and the second step.

This Summary is provided to introduce a selection of concepts in a simplified form that are further described below in the Detailed Description with reference where appropriate to the accompanying drawings. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

### BRIEF DESCRIPTION OF THE DRAWINGS

FIG. 1 is a schematic diagram showing a configuration of an image processing apparatus according to an embodiment of this disclosure.
FIG. 2 is a schematic block diagram of the image processing apparatus according to the embodiment of this disclosure.
FIG. 3 is a schematic diagram showing a configuration of a document sheet conveying device according to an embodiment of this disclosure.
FIG. 4 is a flowchart showing an example of a process that is executed by the image processing apparatus according to the embodiment of this disclosure.
FIG. 5 is a flowchart showing an example of a process that is executed by the image processing apparatus according to the embodiment of this disclosure.

### DETAILED DESCRIPTION

Hereinafter, embodiments of this disclosure will be described with reference to the accompanying drawings. The following embodiments are specific examples of this disclosure and do not intend to limit the technical scope of this disclosure.

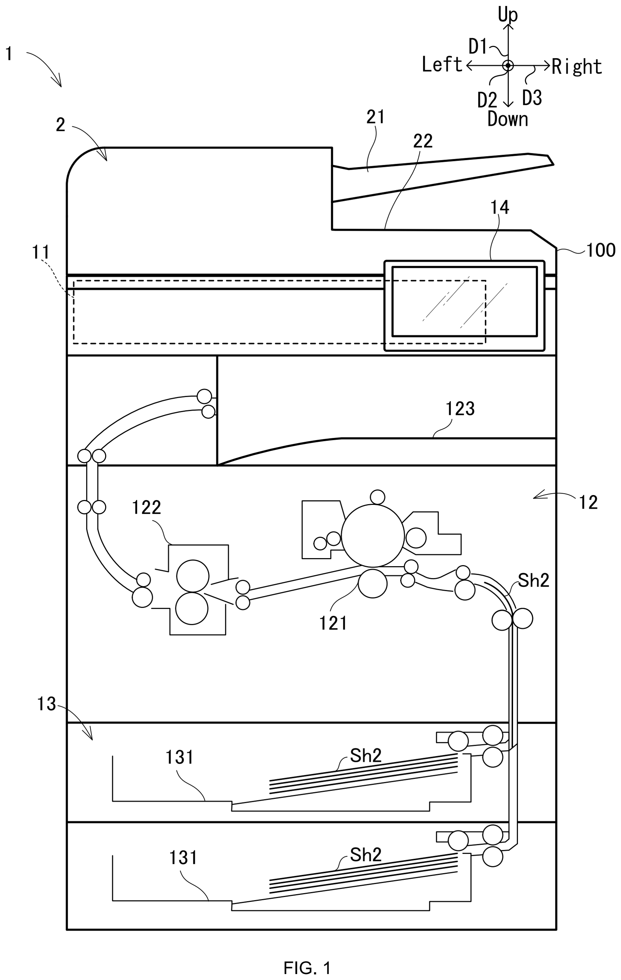

First, the overall configuration of an image processing apparatus 1 according to this embodiment will be described with reference to FIGS. 1 to 3.

The perpendicular direction viewed with the image processing apparatus 1 placed in an installation state (state shown in FIG. 1) that allows the image processing apparatus 1 to be used is defined as an up-down direction D1 for the convenience of description. In addition, the direction of the image processing apparatus 1 shown in FIG. 1 orthogonal to FIG. 1 is defined as a front-back direction D2. The surface of the image processing apparatus 1 on the foreground side of FIG. 1 is defined as a front (front surface). Furthermore, a left-right direction D3 is defined on the assumption that the surface of the image processing apparatus 1 on the left side of FIG. 1 is a left surface.

### [Image Processing Apparatus]

As an example, the image processing apparatus 1 according to this embodiment is a multifunction peripheral having a function of executing a plurality of jobs such as a scan job of reading an image (image data) from a document sheet, a print job of forming an image on the basis of the image data, a facsimile job, and a copy job. The image processing apparatus 1 may be a scanner, a facsimile apparatus, a copier, and the like each capable of executing at least the scan job.

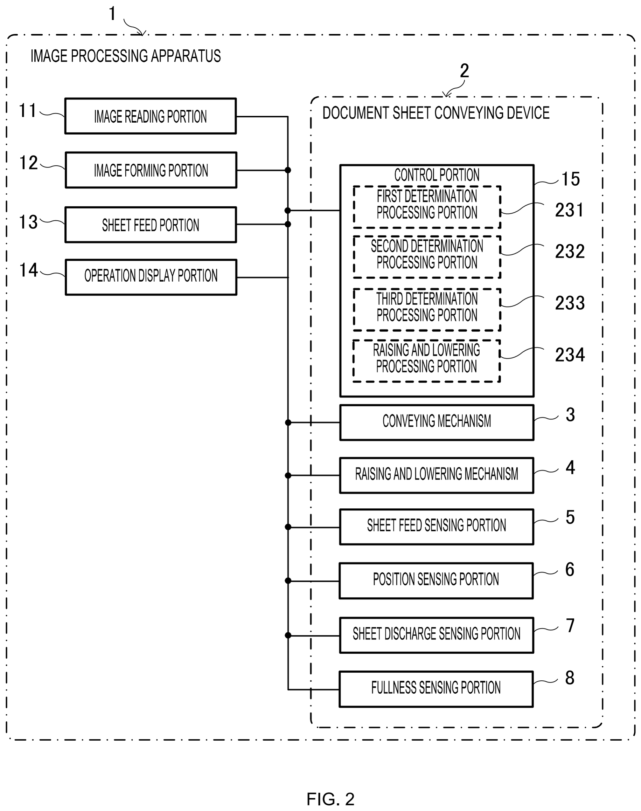

As shown in FIGS. 1 and 2, the image processing apparatus 1 includes a document sheet conveying device 2, an image reading portion 11, an image forming portion 12, a sheet feed portion 13, an operation display portion 14, and a control portion 15. In this embodiment, as shown in FIG. 1, the image processing apparatus 1 includes a housing 100. The document sheet conveying device 2, the image reading portion 11, the image forming portion 12, the sheet feed portion 13, the operation display portion 14, and the control portion 15 are provided to the housing 100.

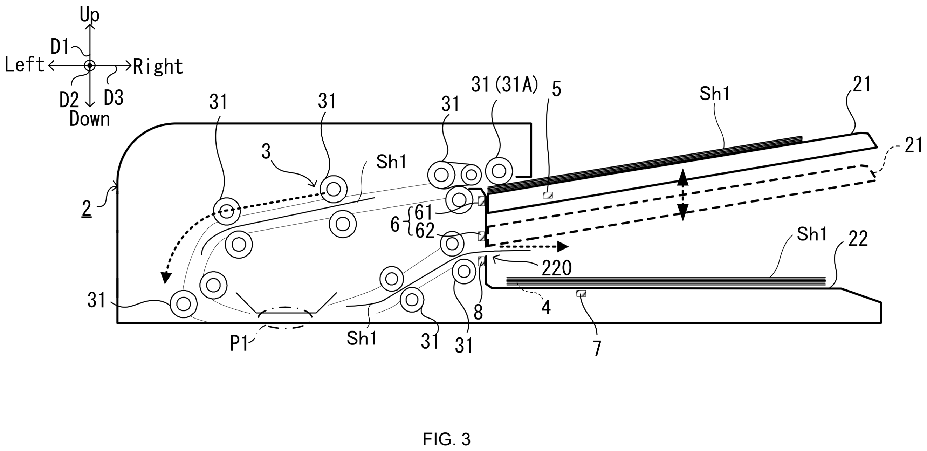

The document sheet conveying device 2 is an automatic document sheet conveying device (auto document feeder (ADF)) in this embodiment. The document sheet conveying device 2 conveys document sheets Sh1 each serving as a reading target from which an image is read by the image reading portion 11. As shown in FIG. 3, the document sheet conveying device 2 includes a document sheet placing portion 21, a document sheet discharge portion 22, a conveying mechanism 3, a raising and lowering mechanism 4, a sheet feed sensing portion 5, a position sensing portion 6, a sheet discharge sensing portion 7, a fullness sensing portion 8, and the like. The document sheet conveying device 2 drives the conveying mechanism 3 to convey the document sheets Sh1 set on the document sheet placing portion 21 to the document sheet discharge portion 22 through an image reading position P1 by the image reading portion 11.

The image reading portion 11 reads an image from each of the document sheets Sh1 (document sheets) and outputs image data corresponding to the read image. The image reading portion 11 includes a document sheet table, a light source, a plurality of mirrors, an optical lens, a charge coupled device (CCD), and the like. For example, the image reading portion 11 reads an image from each of the document sheets Sh1 conveyed by the document sheet conveying device 2 when the document sheet Sh1 passes by the image reading position P1.

The image forming portion 12 forms an image on any of sheets Sh2 on the basis of the image data output from the image reading portion 11. In addition, the image forming portion 12 forms an image on any of the sheets Sh2 on the basis of image data input from an information processing apparatus such as a personal computer to the image processing apparatus 1. In this embodiment, as an example, the image forming portion 12 includes a transfer device 121, a fixing device 122, a document sheet discharge portion 123, and the like as shown in FIG. 1, and forms an image on any of the sheets Sh2 by electrophotography. The image forming portion 12 does not have to be configured to form a monochrome image. The image forming portion 12 may also be configured to form a full-color image using the four colors of C (cyan), M (magenta), Y (yellow), and K (black). In addition, for example, the image forming portion 12 may be configured to form an image on any of the sheets Sh2 in an image forming method such as an inkjet method other than electrophotography.

The sheet feed portion 13 supplies the sheets Sh2 to the image forming portion 12. The sheet feed portion 13 includes a plurality of sheet feed cassettes 131, a manual feed tray, a plurality of conveying rollers, and the like. The sheet feed portion 13 conveys the sheets Sh2 from the plurality of sheet feed cassettes 131, the manual feed tray, or the like through a conveyance path using the plurality of conveying rollers or the like and supplies the sheets Sh2 to the image forming portion 12. The image forming portion 12 forms an image on each of the sheets Sh2 supplied from the sheet feed portion 13 through the conveyance path.

The operation display portion 14 is a user interface in the image processing apparatus 1. The operation display portion 14 includes a display portion such as a liquid-crystal display that displays various types of information in response to a control instruction from the control portion 15 and an operation portion such as a switch or a touch panel that inputs various types of information to the control portion 15 in response to an operation of a user.

The control portion 15 integrally controls the image processing apparatus 1. The control portion 15 is mainly composed of a computer system including one or more processor and one or more memories. In the image processing apparatus 1, the one or more processors execute a program, thereby achieving a function of the control portion 15. The program may be recorded in the one or more memories in advance, provided through an electric communication line such as the Internet, or recorded and provided in a non-transitory recording medium such as a memory card or an optical disc readable to the computer system. The one or more processors are each composed of one or more electronic circuits including a semiconductor integrated circuit. Furthermore, the computer system according to this disclosure includes a microcontroller including one or more processors and one or more memories. The control portion 15 may be a control portion provided separately from a main control portion that integrally controls the image processing apparatus 1.

In addition, the image processing apparatus 1 further includes a storage portion, a communication portion, a power supply portion, and the like. The storage portion includes one or more non-volatile memories and stores, in advance, information about a control program or the like for causing the control portion 15 to execute various processes. The communication portion is an interface that executes data communication with an external apparatus connected to the image processing apparatus 1, for example, through a communication network such as the Internet or a local area network (LAN). The power supply portion is a power supply circuit that generates (outputs) electric power for bringing the image processing apparatus 1 into operation.

### [Document Sheet Conveying Device]

Next, the configuration of the document sheet conveying device 2 according to this embodiment will be described in more detail with reference to FIG. 3.

The document sheet conveying device 2 is a device that conveys the document sheets Sh1 from the document sheet placing portion 21 to the document sheet discharge portion 22. In addition, the document sheets Sh1 are paper as an example in this embodiment, but are not limited to paper. For example, each of the document sheets Sh1 may be another sheet such as a resin film.

The document sheet placing portion 21 is a member on which the document sheets Sh1 to be conveyed by the document sheet conveying device 2 are placed. In this embodiment, the document sheets Sh1 conveyed by the document sheet conveying device 2 are targets from each of which an image is read by the image reading portion 11.

The document sheet placing portion 21 is provided with the sheet feed sensing portion 5 which senses that any of the document sheets Sh1 is placed on the document sheet placing portion 21. The control portion 15 is capable of sensing the presence or absence of any of the document sheets Sh1 on the document sheet placing portion 21 using the sheet feed sensing portion 5. Specifically, the sheet feed sensing portion 5 is an optical sensor including a light irradiation portion and a light receiving portion. The light irradiation portion emits light to the region of the document sheet placing portion 21 in which the document sheets Sh1 are placed. The light receiving portion receives light coming from under the document sheet placing portion 21.

In a case where any of the document sheets Sh1 is placed on the document sheet placing portion 21, the light emitted from the light irradiation portion is reflected by the document sheet Sh1, and the light receiving portion receives a predetermined amount of light, the sheet feed sensing portion 5 inputs a document sheet presence signal to the control portion 15. The document sheet presence signal indicates that any of the document sheets Sh1 is placed on the document sheet placing portion 21. In addition, in a case where none of the document sheets Sh1 are placed on the document sheet placing portion 21, the light emitted from the light irradiation portion is not reflected by the document sheets Sh1, and the light receiving portion does not receive a predetermined amount of light, the sheet feed sensing portion 5 inputs a document sheet absence signal to the control portion 15. The document sheet absence signal indicates that none of the document sheets Sh1 are placed on the document sheet placing portion 21. In another embodiment, the sheet feed sensing portion 5 may be another sensor such as an ultrasonic sensor or a contact sensor.

It is possible to set, for example, the document sheets Sh1 having various sizes (paper sheet sizes) such as A3E (A3 size landscape), A4E (A4 size landscape), 2L size, L size, postal card, or business card on the document sheet placing portion 21. The document sheet placing portion 21 includes a pair of cursors facing each other in the front-back direction D2. The distance between the pair of cursors is adjusted depending on the dimensions of the set document sheets Sh1 in the lateral direction (the front-back direction D2 here) orthogonal to the vertical direction (conveyance direction).

The one or more document sheets Sh1 to be conveyed by the document sheet conveying device 2 are set to be placed on the document sheet placing portion 21. In a case where the plurality of document sheets Sh1 is set on the document sheet placing portion 21, the plurality of these document sheets Sh1 is placed on the document sheet placing portion 21 to be overlaid on each other, that is, stacked, in the up-down direction D1.

The document sheet discharge portion 22 is a member to which the document sheets Sh1 conveyed by the document sheet conveying device 2 are discharged for placement. The document sheet discharge portion 22 is located below the document sheet placing portion 21. The document sheet conveying device 2 conveys and discharges each of the document sheets Sh1 on the document sheet placing portion 21 onto the document sheet discharge portion 22 through the image reading position P1 at which an image process is executed by an image processing portion. In this embodiment, the document sheets Sh1 conveyed by the document sheet conveying device 2 are targets from each of which an image is read by the image reading portion 11. The document sheets Sh1 from each of which an image has been read by the image reading portion 11 are thus discharged onto the upper surface of the document sheet discharge portion 22.

Here, it is possible to place the document sheets Sh1 having various sizes (paper sheet sizes) on the document sheet discharge portion 22 as with the document sheet placing portion 21. Furthermore, in a case where the plurality of document sheets Sh1 is discharged to the document sheet discharge portion 22, the plurality of these document sheets Sh1 is placed on the document sheet discharge portion 22 to be overlaid on each other, that is, stacked, in the up-down direction D1 as with the document sheet placing portion 21.

In the image processing apparatus 1, the quantity of document sheets (referred to as a "specific quantity" below) placeable on the document sheet discharge portion 22 is set in advance. Specifically, in this embodiment, the specific quantity is defined by the height of the document sheets Sh1 on the document sheet discharge portion 22. The image processing apparatus 1 is then provided with the fullness sensing portion 8 to sense whether or not the height of the document sheets Sh1 placed on the document sheet discharge portion 22 reaches specific height corresponding to the specific quantity. The fullness sensing portion 8 will be described below.

The conveying mechanism 3 sequentially conveys the document sheets Sh1 placed on the document sheet placing portion 21 to the document sheet discharge portion 22 through the image reading position P1 at which an image on each of the document sheets Sh1 is read. Specifically, as shown by the dashed arrow in FIG. 3, the conveying mechanism 3 conveys the document sheets Sh1 downward while conveying the document sheets Sh1 leftward from the document sheet placing portion 21. The conveying mechanism 3 turns back the document sheets Sh1 rightward and discharges the document sheets Sh1 onto the document sheet discharge portion 22 through the image reading position P1.

The conveying mechanism 3 includes, for example, a plurality of conveying rollers 31, a power source, and the like. The conveying rollers 31 include a sheet feed roller 31A that feeds the uppermost document sheet Sh1 placed on the document sheet placing portion 21 to the conveying mechanism 3. In this embodiment, the sheet feed roller 31A is provided above the document sheet placing portion 21 and the document sheet Sh1 on the document sheet placing portion 21 comes into contact with the sheet feed roller 31A to be fed. The quantity of document sheets Sh1 placeable on the document sheet placing portion 21 therefore increases as the distance between the document sheet placing portion 21 and the sheet feed roller 31A increases. The quantity of document sheets Sh1 placeable on the document sheet placing portion 21 decreases as the distance between the document sheet placing portion 21 and the sheet feed roller 31A decreases. In addition, the conveying mechanism 3 is provided with a sheet feed sensor (not shown) which senses that the document sheet Sh1 on the document sheet placing portion 21 comes into contact with the sheet feed roller 31A.

The conveying mechanism 3 drives each of the plurality of conveying rollers 31 using the power of the power source including a motor as an example. The conveying mechanism 3 hereby conveys the document sheets Sh1 set on the document sheet placing portion 21 to the document sheet discharge portion 22 one by one through the image reading position P1. For example, when a predetermined number of document sheets Sh1 to be each subjected to a job are set on the document sheet placing portion 21, the conveying mechanism 3 conveys a predetermined number of document sheets Sh1 one by one until a predetermined number of these document sheets Sh1 are all discharged onto the document sheet discharge portion 22. This moves a predetermined number of document sheets Sh1 to be each subjected to a job from the document sheet placing portion 21 to the document sheet discharge portion 22 located below the document sheet placing portion 21.

The raising and lowering mechanism 4 raises and lowers the document sheet placing portion 21. That is, the document sheet placing portion 21 is configured to be movable in the up-down direction D1 within at least a predetermined raising and lowering range. Specifically, the raising and lowering mechanism 4 is configured to be capable of switching and executing a raising operation of moving the document sheet placing portion 21 relatively upward with respect to the housing 100 and a lowering operation of moving the document sheet placing portion 21 relatively downward with respect to the housing 100. Furthermore, when none of the raising operation and the lowering operation are in execution, the raising and lowering mechanism 4 supports the document sheet placing portion 21 at any position within the raising and lowering range.

In particular, in this embodiment, the raising and lowering mechanism 4 allows the document sheet placing portion 21 to move in the up-down direction D1 between an upper limit position and a lower limit position within the raising and lowering range in a stepless manner, and allows the document sheet placing portion 21 to stop at any position within the raising and lowering range. Therefore, for example, the raising and lowering mechanism 4 performs a raising operation to allow the document sheet placing portion 21 located at the lower limit position within the raising and lowering range to move to any position between the lower limit position and the upper limit position within the raising and lowering range. In contrast, the raising and lowering mechanism 4 performs a lowering operation to allow the document sheet placing portion 21 located at the upper limit position within the raising and lowering range to move to any position between the upper limit position and the lower limit position within the raising and lowering range.

Specifically, the raising and lowering mechanism 4 includes, for example, an appropriate mechanism portion such as a ball screw, a rack and a pinion, and a pantograph, a power source, and the like. The raising and lowering mechanism 4 moves the document sheet placing portion 21 straight along the up-down direction D1 by driving the mechanism portion using the power of the power source including a motor as an example.

Here, the raising and lowering mechanism 4 may include a sensor such as an encoder in the mechanism portion or the power source and have a function of detecting the current position of the document sheet placing portion 21. This allows the raising and lowering mechanism 4 to raise and lower the document sheet placing portion 21 within the raising and lowering range in a limited manner and also move the document sheet placing portion 21 to a desired position. It is noted that the document sheet placing portion 21 does not have to be moved, for example, in a stepless manner. The document sheet placing portion 21 may be moved in a stepped manner. Furthermore, the raising and lowering mechanism 4 does not have to be configured to move the document sheet placing portion 21 straight in the up-down direction D1. For example, the raising and lowering mechanism 4 may also raise and lower the document sheet placing portion 21 by rotating the document sheet placing portion 21 using an end (left end) of the document sheet placing portion 21 in the left-right direction D3 as a fulcrum.

The position sensing portion 6 detects the upper limit position and the lower limit position of the document sheet placing portion 21 within the raising and lowering range. That is, when the raising and lowering mechanism 4 raises the document sheet placing portion 21, the position sensing portion 6 detects that the document sheet placing portion 21 reaches the upper limit position within the raising and lowering range. In contrast, when the raising and lowering mechanism 4 lowers the document sheet placing portion 21, the position sensing portion 6 detects that the document sheet placing portion 21 reaches the lower limit position within the raising and lowering range.

Specifically, as shown in FIG. 3, the position sensing portion 6 includes an upper limit sensor 61 and a lower limit sensor 62. Both the upper limit sensor 61 and the lower limit sensor 62 are light transmissive sensors each including a light emitting element and a light receiving element. An output changes depending on whether or not light from a light emitting element is received by a light receiving element. In this embodiment, as an example, an output of the upper limit sensor 61 or the lower limit sensor 62 obtained when light from the light emitting element is received by the light receiving element is defined as "ON" and an output of the upper limit sensor 61 or the lower limit sensor 62 obtained when light from the light emitting element is not received by the light receiving element is defined as "OFF". The position sensing portion 6 outputs outputs (electrical signals) of the upper limit sensor 61 and the lower limit sensor 62 to the control portion 15.

Here, the document sheet placing portion 21 is provided with a light shielding plate (not shown). The upper limit sensor 61 and the lower limit sensor 62 detect the position of the document sheet placing portion 21 using the position of the light shielding plate that moves integrally with the document sheet placing portion 21. That is, if the document sheet placing portion 21 is located at the upper limit position within the raising and lowering range, the light shielding plate is inserted between the light emitting element and the light receiving element of the upper limit sensor 61 and light from the light emitting element is blocked by the light shielding plate. An output of the upper limit sensor 61 is thus "OFF". In contrast, if the document sheet placing portion 21 is lowered to the lower limit position within the raising and lowering range, the light shielding plate is inserted between the light emitting element and the light receiving element of the lower limit sensor 62 and light from the light emitting element is blocked by the light shielding plate. An output of the lower limit sensor 62 is thus "OFF".

The sheet discharge sensing portion 7 is provided to the document sheet discharge portion 22 and used to sense whether or not any of the document sheets Sh1 is placed on the document sheet discharge portion 22. Specifically, the sheet discharge sensing portion 7 is an optical sensor including a light irradiation portion and a light receiving portion. The light irradiation portion emits light upward from the region of the document sheet discharge portion 22 in which the document sheets Sh1 are placed. The light receiving portion receives light coming from above the document sheet discharge portion 22.

In a case where any of the document sheets Sh1 is placed on the document sheet discharge portion 22, the light emitted from the light irradiation portion is reflected by the document sheet Sh1, and the light receiving portion receives a predetermined amount of light, the sheet discharge sensing portion 7 inputs a document sheet presence signal to the control portion 15. The document sheet presence signal indicates that any of the document sheets Sh1 is placed on the document sheet discharge portion 22. In addition, in a case where none of the document sheets Sh1 are placed on the document sheet discharge portion 22, the light emitted from the light irradiation portion is not reflected by the document sheets Sh1, and the light receiving portion does not receive a predetermined amount of light, the sheet discharge sensing portion 7 inputs a document sheet absence signal to the control portion 15. The document sheet absence signal indicates that none of the document sheets Sh1 are placed on the document sheet discharge portion 22. In another embodiment, the sheet discharge sensing portion 7 may be another sensor such as an ultrasonic sensor or a contact sensor.

The fullness sensing portion 8 is provided at a position that allows the fullness sensing portion 8 to sense the presence or absence of any of the document sheets Sh1 at the position of the specific height that is located below a discharge port portion 220 and defined in advance from the upper surface of the document sheet discharge portion 22. The document sheets Sh1 are discharged from the conveying mechanism 3 toward the document sheet discharge portion 22 through the discharge port portion 220. The specific height is height at which the quantity of document sheets Sh1 placed on the document sheet discharge portion 22 reaches the specific quantity. That is, the fullness sensing portion 8 is used to sense whether or not the quantity of document sheets placed on the document sheet discharge portion 22 reaches the specific quantity. The quantity of document sheets Sh1 on the document sheet discharge portion 22 reaching the specific quantity will also be referred to as being full below in some cases.

Specifically, the fullness sensing portion 8 is an optical sensor including a light irradiation portion and a light receiving portion. The light irradiation portion emits light to the upper space of the document sheet discharge portion 22 at the position of the specific height of the document sheet discharge portion 22. The light receiving portion receives light coming from the upper space of the document sheet discharge portion 22.

In a case where the height of the document sheets Sh1 placed on the document sheet discharge portion 22 reaches the specific height, the light emitted from the light irradiation portion is reflected by the document sheets Sh1, and the light receiving portion receives a predetermined amount of light, the fullness sensing portion 8 inputs a document sheet presence signal to the control portion 15. In addition, in a case where the height of the document sheets Sh1 placed on the document sheet discharge portion 22 reaches the specific height, the light emitted from the light irradiation portion is not reflected by the document sheets Sh1, and the light receiving portion does not receive a predetermined amount of light, the fullness sensing portion 8 inputs a document sheet absence signal to the control portion 15. In another embodiment, the fullness sensing portion 8 may be another sensor such as an ultrasonic sensor or a contact sensor.

It is noted that the fullness sensing portion 8 may be a distance measuring sensor that measures the height from the document sheets Sh1 on the document sheet discharge portion 22 to the document sheet placing portion 21. The distance measuring sensor is disposed, for example, on the lower surface side of the document sheet placing portion 21. The distance measuring sensor measures the height from the upper surface of the document sheets Sh1 discharged on the document sheet discharge portion 22 to the lower surface of the document sheet placing portion 21. The distance measuring sensor is a contactless sensor that uses the reflection of light, ultrasonic waves, or the like as an example. This allows the control portion 15 to sense the quantity of document sheets Sh1 placed on the document sheet placing portion 21 on the basis of the height sensed by the distance measuring sensor provided as the fullness sensing portion 8 and the position of the document sheet placing portion 21 in the up-down direction D1.

It is, however, more difficult in this type of document sheet conveying device 2 to pick up a document sheet from the document sheet discharge portion 22 if the document sheet placing portion 21 has a position closer to the document sheet discharge portion 22. Meanwhile, if the document sheet placing portion 21 has a position farther from the document sheet discharge portion 22, a smaller quantity of document sheets are placeable on the document sheet placing portion 21. In contrast, as described below, it is possible in the image processing apparatus 1 and the document sheet conveying device 2 according to this embodiment to facilitate a document sheet to be picked up from the document sheet discharge portion 22 and secure the document sheet placing portion 21 a space that allows a document sheet to be placed in a balanced manner.

Specifically, the document sheet conveying device 2 according to this embodiment includes various processing portions such as a first determination processing portion 231, a second determination processing portion 232, a third determination processing portion 233, and a raising and lowering processing portion 234. In the document sheet conveying device 2, the control portion 15 functions as the various processing portions by executing the various processes in accordance with the control program.

The first determination processing portion 231 determines whether or not any of the document sheets is placed on the document sheet placing portion 21. In this embodiment, the first determination processing portion 231 determines whether or not any of the document sheets is placed on the document sheet placing portion 21 on the basis of a result of sensing by the sheet feed sensing portion 5. That is, the first determination processing portion 231 is capable of determining a state change from the placement of a document sheet to the placement of no document sheet on the document sheet placing portion 21 and a state change from the placement of no document sheet to the placement of a document sheet on the document sheet placing portion 21.

The second determination processing portion 232 determines whether or not any of the document sheets is placed on the document sheet discharge portion 22. In this embodiment, the second determination processing portion 232 determines whether or not any of the document sheets is placed on the document sheet discharge portion 22 on the basis of a result of sensing by the sheet discharge sensing portion 7.

The third determination processing portion 233 determines whether or not the quantity of document sheets placed on the document sheet discharge portion 22 reaches the specific quantity set in advance. In this embodiment, the third determination processing portion 233 determines whether or not the quantity of document sheets placed on the document sheet discharge portion 22 reaches the specific quantity of document sheets on the basis of a result of sensing by the fullness sensing portion 8. Specifically, in the document sheet conveying device 2, the discharge port portion 220 from the conveying mechanism 3 to the document sheet discharge portion 22 is provided above the fullness sensing portion 8. Therefore, in a case where the quantity of document sheets Sh1 on the document sheet discharge portion 22 does not reach the specific quantity in the document sheet conveying device 2, the document sheets Sh1 to be discharged to the document sheet discharge portion 22 pass by the sensing position by the fullness sensing portion 8. The fullness sensing portion 8 thus senses the document sheets Sh1 temporarily. In contrast, in a case where the quantity of document sheets Sh1 on the document sheet discharge portion 22 reaches the specific quantity in the document sheet conveying device 2, the document sheets Sh1 discharged to the document sheet discharge portion 22 are continuously sensed by the fullness sensing portion 8. Therefore, in a case where the fullness sensing portion 8 is sensing the document sheets Sh1 for more than or equal to a time set in advance, that is, in a case where the fullness sensing portion 8 is inputting H signals for more than or equal to the time set in advance, the third determination processing portion 233 determines that the document sheet discharge portion 22 is full.

The raising and lowering processing portion 234 controls raising and lowering operations by the raising and lowering mechanism 4 on the basis of at least results of determinations made by the first determination processing portion 231 and the second determination processing portion 232. In particular, in this embodiment, the raising and lowering processing portion 234 controls raising and lowering operations by the raising and lowering mechanism 4 on the basis of results of determinations made by the first determination processing portion 231, the second determination processing portion 232, and the third determination processing portion 233. It is noted that the raising and lowering processing portion 234 may return the document sheet placing portion 21 to an initial position such as the lower limit position set in advance, for example, when the image processing apparatus 1 is powered on.

In addition, in the image processing apparatus 1, the control portion 15 executes a specific job accompanied by an automatic image reading process of reading an image from each of the document sheets Sh1 conveyed from the document sheet placing portion 21 to the document sheet discharge portion 22 by the conveying mechanism 3 through the image reading position P1. The specific job is a scan job, a copy job, a facsimile job, or the like. Additionally, although not described here because the specific job has been conventionally known well, the raising and lowering processing portion 234 controls the raising and lowering mechanism 4 and raises the document sheet placing portion 21 as necessary to allow the conveying rollers 31 to convey the document sheets Sh1 placed on the document sheet placing portion 21 while the specific job is in execution.

Specifically, while the specific job is in execution, the raising and lowering processing portion 234 controls the raising and lowering mechanism 4 and raises the document sheet placing portion 21 until the sheet feed sensor (not shown) senses that the document sheets Sh1 on the document sheet placing portion 21 come into contact with the conveying rollers 31 whenever an image reading process on each of a predetermined number of document sheets Sh1 comes to an end. In addition, in a case where the sheet feed sensor (not shown) senses that the document sheets Sh1 on the document sheet placing portion 21 go apart from the conveying rollers 31 while the specific job is in execution, the raising and lowering processing portion 234 may control the raising and lowering mechanism 4 and raise the document sheet placing portion 21 until the sheet feed sensor (not shown) senses that the document sheets Sh1 on the document sheet placing portion 21 come into contact with the conveying rollers 31.

### [First Raising and Lowering Control Process]

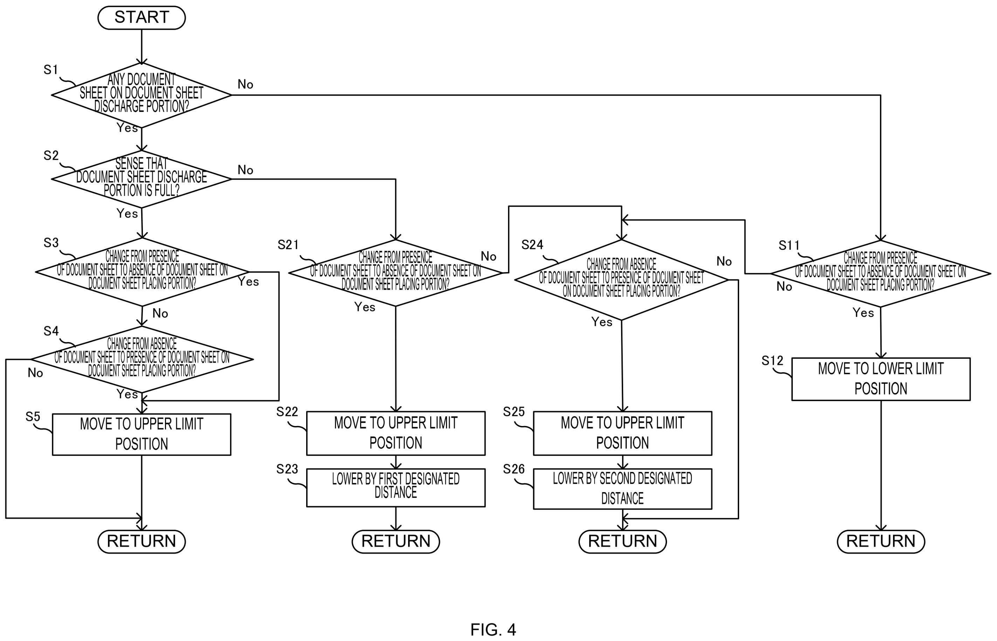

A first raising and lowering control process that is executed by the control portion 15 of the image processing apparatus 1 according to this embodiment will be described below with reference to FIG. 4. In this embodiment, a method including one or more steps executed in the first raising and lowering control process and a second raising and lowering control process described below is an example of the document sheet conveying method according to this disclosure.

The first raising and lowering control process is executed by the control portion 15 in a case where the image processing apparatus 1 is powered on. The first raising and lowering control process is not, however, executed when the specific job is executed. The first raising and lowering control process is started again at a timing at which the specific job comes to an end and the second raising and lowering control process described below comes to an end. In other words, the first raising and lowering control process is a process that is executed while the image processing apparatus 1 is on standby to execute a job.

Here, steps S1, S2, ... in FIG. 4 denote the numbers of processing procedures (steps) that are executed by the control portion 15. The control portion 15 is mainly composed of a computer system including one or more processors and one or more memories. The one or more processors execute a control program, thereby achieving the following processes.

### <Step S1>

In step S1, the second determination processing portion 232 of the control portion 15 determines whether or not any of the document sheets Sh1 is placed on the document sheet discharge portion 22. Here, when it is determined that any of the document sheets Sh1 is placed on the document sheet discharge portion 22 (S1: Yes), the process transitions to step S2. When it is determined that none of the document sheets Sh1 are placed on the document sheet discharge portion 22 (S1: No), the process transitions to step S11.

### <Step S2>

In step S2, the third determination processing portion 233 of the control portion 15 determines whether or not the document sheet discharge portion 22 is full on the basis of a result of sensing by the fullness sensing portion 8. Here, when it is determined that the document sheet discharge portion 22 is full (S2: Yes), the process transitions to step S3. When it is determined that the document sheet discharge portion 22 is not full (S2: No), the process transitions to step S21.

### <Step S3>

In step S3, the first determination processing portion 231 of the control portion 15 determines whether or not the placement of any of the document sheets Sh1 on the document sheet placing portion 21 transitions to the placement of none of the document sheets Sh1 on the basis of a result of sensing by the sheet feed sensing portion 5. Here, when it is determined that the placement of any of the document sheets Sh1 on the document sheet placing portion 21 transitions to the placement of none of the document sheets Sh1 (S3: Yes), the process transitions to step S5. In contrast, when it is determined that the placement of any of the document sheets Sh1 on the document sheet placing portion 21 does not transition to the placement of none of the document sheets Sh1 (S3: No), the process transitions to step S4.

### <Step S4>

In step S4, the first determination processing portion 231 of the control portion 15 determines whether or not the placement of none of the document sheets Sh1 on the document sheet placing portion 21 transitions to the placement of any of the document sheets Sh1 on the basis of a result of sensing by the sheet feed sensing portion 5. Here, when it is determined that the placement of none of the document sheets Sh1 on the document sheet placing portion 21 transitions to the placement of any of the document sheets Sh1 (S4: Yes), the process transitions to step S5. In contrast, when it is determined that the placement of none of the document sheets Sh1 on the document sheet placing portion 21 does not transition to the placement of any of the document sheets Sh1 (S4: No), the process is returned to step S1.

### <Step S5>

In step S5, the raising and lowering processing portion 234 of the control portion 15 causes the raising and lowering mechanism 4 to perform a raising operation, moves the document sheet placing portion 21 to a seventh position set in advance, and returns the process to step S1. In this embodiment, the seventh position is the upper limit position. This increases the space between the document sheet placing portion 21 and the document sheet discharge portion 22, facilitating a user to pick up the document sheets Sh1 placed on the document sheet discharge portion 22.

Specifically, in a case where an output of the upper limit sensor 61 of the position sensing portion 6 is "OFF", the raising and lowering processing portion 234 determines that the document sheet placing portion 21 moves to the upper limit position, and stops the raising operation by the raising and lowering mechanism 4. It is noted that the raising and lowering processing portion 234 may cause the raising and lowering mechanism 4 to execute a raising operation for an upper limit maximum necessary time set in advance as a time necessary for the document sheet placing portion 21 to reach the upper limit position from the lower limit position in another embodiment.

In addition, in this embodiment, in a case where the placement of any of the document sheets Sh1 on the document sheet placing portion 21 transitions to the placement of none of the document sheets Sh1 (S3: Yes) and in a case where the placement of none of the document sheets Sh1 on the document sheet placing portion 21 transitions to the placement of any of the document sheets Sh1 (S4: Yes), similar steps S5 are executed.

Meanwhile, in another embodiment, in a case where the placement of any of the document sheets Sh1 on the document sheet placing portion 21 transitions to the placement of none of the document sheets Sh1 (S3: Yes) and in a case where the placement of none of the document sheets Sh1 on the document sheet placing portion 21 transitions to the placement of any of the document sheets Sh1 (S4: Yes), different processes may be executed. For example, in a case where the first determination processing portion 231 determines that the placement of none of the document sheets Sh1 on the document sheet placing portion 21 transitions to the placement of any of the document sheets Sh1, the raising and lowering processing portion 234 moves the document sheet placing portion 21 to the seventh position using the raising and lowering mechanism 4. Meanwhile, in a case where the first determination processing portion 231 determines that the placement of none of the document sheets Sh1 on the document sheet placing portion 21 transitions to the placement of any of the document sheets Sh1, the raising and lowering processing portion 234 moves the document sheet placing portion 21 to an eighth position set in advance and different from the seventh position using the raising and lowering mechanism 4. The eighth position may be a position farther from the document sheet discharge portion 22 than the seventh position or a position closer to the document sheet discharge portion 22 than the seventh position.

### <Step S21>

In step S21, the first determination processing portion 231 of the control portion 15 determines whether or not the placement of any of the document sheets Sh1 on the document sheet placing portion 21 transitions to the placement of none of the document sheets Sh1 on the basis of a result of sensing by the sheet feed sensing portion 5. Here, when it is determined that the placement of any of the document sheets Sh1 on the document sheet placing portion 21 transitions to the placement of none of the document sheets Sh1 (S21: Yes), the process transitions to step S22. When it is determined that the placement of any of the document sheets Sh1 on the document sheet placing portion 21 does not transition to the placement of none of the document sheets Sh1 (S21: No), the process transitions to step S24.

### <Steps S22 to S23>

In steps S22 to S23, the raising and lowering processing portion 234 of the control portion 15 causes the raising and lowering mechanism 4 to perform a raising operation, moves the document sheet placing portion 21 to a first position set in advance, and returns the process to step S1. In this embodiment, the first position is a position lower than the upper limit position by a first designated distance set in advance. It is noted that the first position is a position which is at least lower than the upper limit position and higher than the lower limit position. This increases the space between the document sheet placing portion 21 and the document sheet discharge portion 22, facilitating a user to pick up the document sheets Sh1 placed on the document sheet discharge portion 22. In addition, in this embodiment, the first position is a position lower than the upper limit position by the first designated distance set in advance. This increases the upper space of the document sheet placing portion 21 in comparison with the upper space obtained in a case where the document sheet placing portion 21 is located at the upper limit position. It is thus possible to secure the document sheet placing portion 21 a space that allows a document sheet to be placed.

Specifically, in step S22, the raising and lowering processing portion 234 causes the raising and lowering mechanism 4 to perform a raising operation to move the document sheet placing portion 21 to the upper limit position as in step S5 in this embodiment. After that, in step S23, the raising and lowering processing portion 234 moves (lowers) the document sheet placing portion 21 to the first position lower than the upper limit position by the first designated distance set in advance and returns the process to step S1. Specifically, in a case where the raising and lowering mechanism 4 is executing a lowering operation for a first designated time set in advance, the raising and lowering processing portion 234 determines that the document sheet placing portion 21 moves the first designated distance, and stops the lowering operation by the raising and lowering mechanism 4.

### <Step S24>

In step S24, the first determination processing portion 231 of the control portion 15 determines whether or not the placement of none of the document sheets Sh1 on the document sheet placing portion 21 transitions to the placement of any of the document sheets Sh1 on the basis of a result of sensing by the sheet feed sensing portion 5. Here, when it is determined that the placement of none of the document sheets Sh1 on the document sheet placing portion 21 transitions to the placement of any of the document sheets Sh1 (S24: Yes), the process transitions to step S25. When it is determined that the placement of none of the document sheets Sh1 on the document sheet placing portion 21 does not transition to the placement of any of the document sheets Sh1 (S24: No), the process is returned to step S21.

### <Steps S25 to S26>

In steps S25 to S26, the raising and lowering processing portion 234 of the control portion 15 causes the raising and lowering mechanism 4 to perform a raising operation, moves the document sheet placing portion 21 to a second position set in advance, and returns the process to step S1. In this embodiment, the second position is a position lower than the upper limit position by a second designated distance set in advance. It is noted that the second position is a position which is at least lower than the upper limit position and higher than the lower limit position. This increases the space between the document sheet placing portion 21 and the document sheet discharge portion 22, facilitating a user to pick up the document sheets Sh1 placed on the document sheet discharge portion 22. In addition, in this embodiment, the second position is a position lower than the upper limit position by the second designated distance set in advance. This increases the upper space of the document sheet placing portion 21 in comparison with the upper space obtained in a case where the document sheet placing portion 21 is located at the upper limit position. It is thus possible to secure the document sheet placing portion 21 a space that allows a document sheet to be placed. It is noted that the first position and the second position may be the same position or different positions. For example, the second position can be a position farther from the document sheet discharge portion 22 (position higher) than the first position.

Specifically, in step S25, the raising and lowering processing portion 234 causes the raising and lowering mechanism 4 to perform a raising operation to move the document sheet placing portion 21 to the upper limit position as in step S5 in this embodiment. After that, in step S26, the raising and lowering processing portion 234 moves (lowers) the document sheet placing portion 21 to the second position lower than the upper limit position by the second designated distance set in advance and returns the process to step S1. Specifically, in a case where the raising and lowering mechanism 4 is executing a lowering operation for a second designated time set in advance, the raising and lowering processing portion 234 determines that the document sheet placing portion 21 moves the second designated distance, and stops the lowering operation by the raising and lowering mechanism 4.

### <Step S11>

In step S11, the first determination processing portion 231 of the control portion 15 determines whether or not the placement of any of the document sheets Sh1 on the document sheet placing portion 21 transitions to the placement of none of the document sheets Sh1 on the basis of a result of sensing by the sheet feed sensing portion 5. Here, when it is determined that the placement of any of the document sheets Sh1 on the document sheet placing portion 21 transitions to the placement of none of the document sheets Sh1 (S11: Yes), the process transitions to step S12. In contrast, when it is determined that the placement of any of the document sheets Sh1 on the document sheet placing portion 21 does not transition to the placement of none of the document sheets Sh1 (S11: No), the process transitions to step S24.

Additionally, in steps S25 to S26 executed after transition from step S11 to step S24, the raising and lowering processing portion 234 may move the document sheet placing portion 21 to a sixth position set in advance and different from the second position in another embodiment. The sixth position is a position lower than the upper limit position by a sixth designated distance set in advance. It is noted that the sixth position is a position which is at least lower than the upper limit position and higher than the lower limit position. In addition, the sixth position is a position closer to the document sheet discharge portion 22 (position lower) than the second position or a position farther from the document sheet discharge portion 22 (position higher) than the second position.

### <Step S12>

In step S12, the raising and lowering processing portion 234 of the control portion 15 causes the raising and lowering mechanism 4 to perform a lowering operation, moves the document sheet placing portion 21 to a fifth position set in advance, and returns the process to step S1. In this embodiment, the fifth position is the lower limit position. This increases the upper space of the document sheet placing portion 21. This facilitates a user to place the document sheets Sh1, for example, on the document sheet placing portion 21 and allows the user to place the more document sheets Sh1 on the document sheet placing portion 21.

Specifically, in a case where an output of the lower limit sensor 62 of the position sensing portion 6 is "OFF", the raising and lowering processing portion 234 determines that the document sheet placing portion 21 moves to the lower limit position, and stops the lowering operation by the raising and lowering mechanism 4. It is noted that the raising and lowering processing portion 234 may cause the raising and lowering mechanism 4 to execute a lowering operation for a lower limit maximum necessary time set in advance as a time necessary for the document sheet placing portion 21 to reach the lower limit position from the upper limit position in another embodiment.

### [Second Raising and Lowering Control Process]

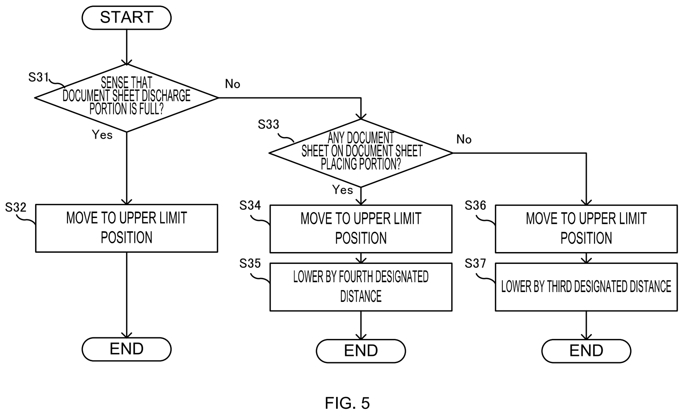

A second raising and lowering control process that is executed by the control portion 15 of the image processing apparatus 1 according to this embodiment will be described below with reference to FIG. 5. The second raising and lowering control process is executed when the specific job accompanied by the automatic image reading process comes to an end.

Here, steps S31, S32, ... in FIG. 5 denote the numbers of processing procedures (steps) that are executed by the control portion 15. The control portion 15 is mainly composed of a computer system including one or more processors and one or more memories. The one or more processors execute a control program, thereby achieving the following processes.

In addition, the procedures of the first raising and lowering control process and the second raising and lowering control process are merely examples. The order of the processes shown in the flowcharts in FIGS. 4 and 5 can be switched as appropriate or processes can also be added or omitted. For example, in this embodiment, when the automatic image reading process comes to an end, each of the document sheets Sh1 is discharged to the document sheet discharge portion 22. It is thus assumed that the document sheets Sh1 are placed on the document sheet discharge portion 22 in the second raising and lowering control process. Meanwhile, it is determined in the second raising and lowering control process whether or not any of the document sheets Sh1 is placed on the document sheet discharge portion 22 on the basis of a result of sensing by the sheet discharge sensing portion 7. In a case where any of the document sheets Sh1 is placed on the document sheet discharge portion 22, step S31 described below may be executed.

### <Step S31>

In step S31, the third determination processing portion 233 of the control portion 15 determines whether or not the document sheet discharge portion 22 is full as in step S2. Here, when it is determined that the document sheet discharge portion 22 is full (S31: Yes), the process transitions to step S32. When it is determined that the document sheet discharge portion 22 is not full (S31: No), the process transitions to step S33.

### <Step S32>

In step S32, the raising and lowering processing portion 234 of the control portion 15 causes the raising and lowering mechanism 4 to perform a raising operation to move the document sheet placing portion 21 to the seventh position as in step S5 and brings the second raising and lowering control process to an end.

### <Step S33>

In step S33, the raising and lowering processing portion 234 of the control portion 15 determines whether or not any of the document sheets is placed on the document sheet placing portion 21 on the basis of a result of sensing by the sheet feed sensing portion 5. Here, when it is determined that a document sheet is placed on the document sheet placing portion 21 (S33: Yes), the process transitions to step S34. When it is determined that no document sheet is placed on the document sheet placing portion 21 (S33: No), the process transitions to step S36.

### <Steps S34 to S35>

In steps S34 to S35, the raising and lowering processing portion 234 of the control portion 15 causes the raising and lowering mechanism 4 to perform a raising operation, moves the document sheet placing portion 21 to a fourth position set in advance, and returns the process to step S1. In this embodiment, the fourth position is a position lower than the upper limit position by a fourth designated distance set in advance. It is noted that the fourth position is a position which is at least lower than the upper limit position and higher than the lower limit position. This increases the space between the document sheet placing portion 21 and the document sheet discharge portion 22, facilitating a user to pick up the document sheets Sh1 placed on the document sheet discharge portion 22. In addition, in this embodiment, the fourth position is a position lower than the upper limit position by the fourth designated distance set in advance. This increases the upper space of the document sheet placing portion 21 in comparison with the upper space obtained in a case where the document sheet placing portion 21 is located at the upper limit position. It is thus possible to secure the document sheet placing portion 21 a space that allows a document sheet to be placed.

Specifically, in step S34, the raising and lowering processing portion 234 causes the raising and lowering mechanism 4 to perform a raising operation to move the document sheet placing portion 21 to the upper limit position as in step S5 in this embodiment. After that, in step S35, the raising and lowering processing portion 234 moves (lowers) the document sheet placing portion 21 to the fourth position lower than the upper limit position by the fourth designated distance set in advance and brings the second raising and lowering control process to an end. Specifically, in a case where the raising and lowering mechanism 4 is executing a lowering operation for a fourth designated time set in advance, the raising and lowering processing portion 234 determines that the document sheet placing portion 21 moves the fourth designated distance, and stops the lowering operation by the raising and lowering mechanism 4.

It is noted that the second designated distance and the fourth designated distance are the same and the second position and the fourth position are the same in this embodiment. Meanwhile, the second designated distance and the fourth designated distance can be different and the second position and the fourth position can be different in another embodiment. For example, in a case where the first determination processing portion 231 determines that any of the document sheets Sh1 is placed on the document sheet placing portion 21 when the automatic image reading process of reading an image from the document sheet Sh1 comes to an end, the automatic image reading process for the document sheet Sh1 can be continuously executed. The fourth position can be therefore a position farther from the document sheet discharge portion 22 than the second position. This allows the image processing apparatus 1 to quickly start the automatic image reading process for each of the document sheets Sh1 placed on the document sheet placing portion 21.

### <Steps S36 to S37>

In steps S36 to S37, the raising and lowering processing portion 234 of the control portion 15 causes the raising and lowering mechanism 4 to perform a raising operation, moves the document sheet placing portion 21 to a third position set in advance, and returns the process to step S1. In this embodiment, the third position is a position lower than the upper limit position by a third designated distance set in advance. It is noted that the third position is a position which is at least lower than the upper limit position and higher than the lower limit position. This increases the space between the document sheet placing portion 21 and the document sheet discharge portion 22, facilitating a user to pick up the document sheets Sh1 placed on the document sheet discharge portion 22. In addition, in this embodiment, the third position is a position lower than the upper limit position by the third designated distance set in advance. This increases the upper space of the document sheet placing portion 21 in comparison with the upper space obtained in a case where the document sheet placing portion 21 is located at the upper limit position. It is thus possible to secure the document sheet placing portion 21 a space that allows a document sheet to be placed.

Specifically, in step S36, the raising and lowering processing portion 234 causes the raising and lowering mechanism 4 to perform a raising operation to move the document sheet placing portion 21 to the upper limit position as in step S5 in this embodiment. After that, in step S37, the raising and lowering processing portion 234 moves (lowers) the document sheet placing portion 21 to the third position lower than the upper limit position by the third designated distance set in advance and brings the second raising and lowering control process to an end. Specifically, in a case where the raising and lowering mechanism 4 is executing a lowering operation for a third designated time set in advance, the raising and lowering processing portion 234 determines that the document sheet placing portion 21 moves the third designated distance, and stops the lowering operation by the raising and lowering mechanism 4.

It is noted that the first designated distance and the third designated distance are the same and the first position and the third position are the same in this embodiment. Meanwhile, the first designated distance and the third designated distance can be different and the first position and the third position can be different in another embodiment. For example, in a case where the first determination processing portion 231 determines that none of the document sheets Sh1 are placed on the document sheet placing portion 21 when the automatic image reading process of reading an image from the document sheet Sh1 comes to an end, the automatic image reading process for the document sheet Sh1 is not continuously executed with a high probability. Therefore, the third position can be a position farther from the document sheet discharge portion 22 (position higher) than the first position. This facilitates the document sheets Sh1 placed on the document sheet discharge portion 22 to be picked up.

As described above, in the image processing apparatus 1 according to this embodiment, raising and lowering control is performed on the document sheet placing portion 21 on the basis of results of determinations made by the first determination processing portion 231 and the second determination processing portion 232 using at least the document sheet placing portion 21 and the document sheet discharge portion 22. It is thus possible in the image processing apparatus 1 to facilitate a document sheet to be picked up from the document sheet discharge portion and secure the document sheet placing portion a space that allows a document sheet to be placed in a balanced manner.

Additionally, the first position to the eighth position described in this embodiment are merely examples and it is sufficient if the positions are optionally set in advance. In particular, the heights of the first position to the fourth position can have a relationship of the first position < the second position < the third position < the fourth position (the first position is the lowest and the fourth position is the highest). In addition, the control portion 15 may allow the first position to the eighth position to be optionally changed in response to a user operation. In addition, the control portion 15 may allow the necessity or unnecessity to execute any one or more of various raising and lowering operations in the first raising and lowering control process and the second raising and lowering control process to be changed in response to a user operation.

Additionally, in this embodiment, the case has been described where raising and lowering control (position control) over the document sheet placing portion 21 is performed depending on the presence or absence of any of the document sheets Sh1 on the document sheet placing portion 21, the presence or absence of any of the document sheets Sh1 on the document sheet discharge portion 22, and the full condition of the document sheet discharge portion 22. Meanwhile, in another embodiment, raising and lowering control (position control) over the document sheet placing portion 21 may be performed depending on one or more of the presence or absence of any of the document sheets Sh1 on the document sheet placing portion 21, the presence or absence of any of the document sheets Sh1 on the document sheet discharge portion 22, and the full condition of the document sheet discharge portion 22. For example, in another embodiment, raising and lowering control (position control) over the document sheet placing portion 21 may be performed depending on the presence or absence of any of the document sheets Sh1 on the document sheet placing portion 21 and the presence or absence of any of the document sheets Sh1 on the document sheet discharge portion 22. In this case, steps S2 and S21 to S23 in the first raising and lowering control process in FIG. 4 and steps S31 to S32 in the second raising and lowering control process in FIG. 5 are omitted. In addition, any one of steps S2 and S21 to S23 in the first raising and lowering control process in FIG. 4 and steps S31 to S32 in the second raising and lowering control process in FIG. 5 alone may be omitted.

In addition, in this embodiment, the case has been described where the position of the document sheet placing portion 21 is controlled depending on the execution time (such as the first designated time to the fourth designated time) of a lowering operation from the upper limit position by the raising and lowering mechanism 4. In another embodiment, there may be provided a sensing portion (not shown) such as an optical sensor, an ultrasonic sensor, or a contact sensor which senses that the document sheet placing portion 21 reaches each of the first position to the eighth position. In this case, the raising and lowering processing portion 234 may control the raising and lowering mechanism 4 to control the position of the document sheet placing portion 21 on the basis of a result of the sensing by the sensing portion (not shown) in the first raising and lowering control process and the second raising and lowering control process.

### [Supplementary Notes of Disclosure]

The gist of the disclosure extracted from the embodiments described above will be supplementarily noted below. It is noted that the respective configurations and the respective processing functions described in the following supplementary notes can be sorted out and used in any combination.

### <Supplementary Note 1>

A document sheet conveying device including:
a conveying mechanism configured to sequentially convey document sheets placed on a document sheet placing portion to a document sheet discharge portion through an image reading position at which an image is read from each of the document sheets, the document sheet discharge portion being provided below the document sheet placing portion;
a raising and lowering mechanism configured to raise and lower the document sheet placing portion;
a first determination processing portion configured to determine whether or not any of the document sheets is placed on the document sheet placing portion;
a second determination processing portion configured to determine whether or not any of the document sheets is placed on the document sheet discharge portion; and
a raising and lowering processing portion configured to control raising and lowering operations by the raising and lowering mechanism on the basis of results of determinations made by the first determination processing portion and the second determination processing portion.

### <Supplementary Note 2>

The document sheet conveying device according to Supplementary Note 1, in which, in a case where the second determination processing portion determines that any of the document sheets is placed on the document sheet discharge portion and the first determination processing portion determines that placement of any of the document sheets on the document sheet placing portion transitions to placement of none of the document sheets, the raising and lowering processing portion moves the document sheet placing portion to a first position using the raising and lowering mechanism, the first position being set in advance.

### <Supplementary Note 3>

The document sheet conveying device according to Supplementary Note 1 or 2, in which, in a case where the second determination processing portion determines that any of the document sheets is placed on the document sheet discharge portion and the first determination processing portion determines that placement of none of the document sheets on the document sheet placing portion transitions to placement of any of the document sheets, the raising and lowering processing portion moves the document sheet placing portion to a second position using the raising and lowering mechanism, the second position being set in advance.

### <Supplementary Note 4>

The document sheet conveying device according to any of Supplementary Notes 1 to 3, in which, in a case where the first determination processing portion determines that none of the document sheets are placed on the document sheet placing portion when an image reading process of reading an image from each of the document sheets comes to an end, the raising and lowering processing portion moves the document sheet placing portion to a third position using the raising and lowering mechanism, the third position being set in advance.

### <Supplementary Note 5>

The document sheet conveying device according to any of Supplementary Notes 1 to 4, in which, in a case where the first determination processing portion determines that any of the document sheets is placed on the document sheet placing portion when an image reading process of reading an image from each of the document sheets comes to an end, the raising and lowering processing portion moves the document sheet placing portion to a fourth position using the raising and lowering mechanism, the fourth position being set in advance.

### <Supplementary Note 6>

The document sheet conveying device according to any of Supplementary Notes 1 to 5, in which, in a case where the second determination processing portion determines that none of the document sheets are placed on the document sheet discharge portion and the first determination processing portion determines that placement of any of the document sheets on the document sheet placing portion transitions to placement of none of the document sheets, the raising and lowering processing portion moves the document sheet placing portion to a fifth position using the raising and lowering mechanism, the fifth position being set in advance.

### <Supplementary Note 7>

The document sheet conveying device according to any of Supplementary Notes 1 to 6, in which, in a case where the second determination processing portion determines that none of the document sheets are placed on the document sheet discharge portion and the first determination processing portion determines that placement of none of the document sheets on the document sheet placing portion transitions to placement of any of the document sheets, the raising and lowering processing portion moves the document sheet placing portion to a sixth position using the raising and lowering mechanism, the sixth position being set in advance.

### <Supplementary Note 8>

The document sheet conveying device according to any of Supplementary Notes 1 to 7, further including a third determination processing portion configured to determine whether or not a quantity of document sheets placed on the document sheet discharge portion reaches a specific quantity set in advance, in which
in a case where the third determination processing portion determines that the quantity of document sheets placed on the document sheet discharge portion reaches the specific quantity and the first determination processing portion determines that placement of any of the document sheets on the document sheet placing portion transitions to placement of none of the document sheets, the raising and lowering processing portion moves the document sheet placing portion to a seventh position using the raising and lowering mechanism, the seventh position being set in advance.

### <Supplementary Note 9>

The document sheet conveying device according to any of Supplementary Note 1 to 8, further including a third determination processing portion configured to determine whether or not a quantity of document sheets placed on the document sheet discharge portion reaches a specific quantity set in advance, in which
in a case where the third determination processing portion determines that the quantity of document sheets placed on the document sheet discharge portion reaches the specific quantity and the first determination processing portion determines that placement of none of the document sheets on the document sheet placing portion transitions to placement of any of the document sheets, the raising and lowering processing portion moves the document sheet placing portion to an eighth position using the raising and lowering mechanism, the eighth position being set in advance.

### <Supplementary Note 10>

An image processing apparatus including:
the document sheet conveying device according to any of Supplementary Notes 1 to 9; and
an image reading portion configured to read an image from a document sheet conveyed by the document sheet conveying device.

### <Supplementary Note 11>

A document sheet conveying method of causing one or more processors to execute a first step, a second step, and a third step, the one or more processors being configured to control a document sheet conveying device including a conveying mechanism configured to sequentially convey document sheets placed on a document sheet placing portion to a document sheet discharge portion through an image reading position at which an image is read from each of the document sheets and a raising and lowering mechanism configured to raise and lower the document sheet placing portion, the document sheet discharge portion being provided below the document sheet placing portion, in which
whether or not any of the document sheets is placed on the document sheet placing portion is determined in the first step,
whether or not any of the document sheets is placed on the document sheet discharge portion is determined in the second step, and
raising and lowering operations by the raising and lowering mechanism are controlled in the third step on the basis of results of determinations made in the first step and the second step.

It is to be understood that the embodiments herein are illustrative and not restrictive, since the scope of the disclosure is defined by the appended claims rather than by the description preceding them, and all changes that fall within metes and bounds of the claims, or equivalence of such metes and bounds thereof are therefore intended to be embraced by the claims.

## Claims

1. A document sheet conveying device (2) comprising:
a conveying mechanism (3) configured to sequentially convey document sheets (Sh1) placed on a document sheet placing portion (21) to a document sheet discharge portion (22) through an image reading position (P1) at which an image is read from each of the document sheets (Sh1), the document sheet discharge portion (22) being provided below the document sheet placing portion (21);
a raising and lowering mechanism (4) configured to raise and lower the document sheet placing portion (21);
a first determination processing portion (231) configured to determine whether or not any of the document sheets (Sh1) is placed on the document sheet placing portion (21);
a second determination processing portion (232) configured to determine whether or not any of the document sheets (Sh1) is placed on the document sheet discharge portion (22); and
a raising and lowering processing portion (234) configured to control raising and lowering operations by the raising and lowering mechanism (4) on a basis of results of determinations made by the first determination processing portion (231) and the second determination processing portion (232).

2. The document sheet conveying device (2) according to claim 1, wherein, in a case where the second determination processing portion (232) determines that any of the document sheets (Sh1) is placed on the document sheet discharge portion (22) and the first determination processing portion (231) determines that placement of any of the document sheets (Sh1) on the document sheet placing portion (21) transitions to placement of none of the document sheets (Sh1), the raising and lowering processing portion (234) moves the document sheet placing portion (21) to a first position using the raising and lowering mechanism (4), the first position being set in advance.

3. The document sheet conveying device (2) according to claim 1, wherein, in a case where the second determination processing portion (232) determines that any of the document sheets (Sh1) is placed on the document sheet discharge portion (22) and the first determination processing portion (231) determines that placement of none of the document sheets (Sh1) on the document sheet placing portion (21) transitions to placement of any of the document sheets (Sh1), the raising and lowering processing portion (234) moves the document sheet placing portion (21) to a second position using the raising and lowering mechanism (4), the second position being set in advance.

4. The document sheet conveying device (2) according to any of claims 1 to 3, wherein, in a case where the first determination processing portion (231) determines that none of the document sheets (Sh1) are placed on the document sheet placing portion (21) when an image reading process of reading an image from each of the document sheets (Sh1) comes to an end, the raising and lowering processing portion (234) moves the document sheet placing portion (21) to a third position using the raising and lowering mechanism (4), the third position being set in advance.

5. The document sheet conveying device (2) according to any of claims 1 to 3, wherein, in a case where the first determination processing portion (231) determines that any of the document sheets (Sh1) is placed on the document sheet placing portion (21) when an image reading process of reading an image from each of the document sheets (Sh1) comes to an end, the raising and lowering processing portion (234) moves the document sheet placing portion (21) to a fourth position using the raising and lowering mechanism (4), the fourth position being set in advance.

6. The document sheet conveying device (2) according to claim 1, wherein, in a case where the second determination processing portion (232) determines that none of the document sheets (Sh1) are placed on the document sheet discharge portion (22) and the first determination processing portion (231) determines that placement of any of the document sheets (Sh1) on the document sheet placing portion (21) transitions to placement of none of the document sheets (Sh1), the raising and lowering processing portion (234) moves the document sheet placing portion (21) to a fifth position using the raising and lowering mechanism (4), the fifth position being set in advance.

7. The document sheet conveying device (2) according to claim 1, wherein, in a case where the second determination processing portion (232) determines that none of the document sheets (Sh1) are placed on the document sheet discharge portion (22) and the first determination processing portion (231) determines that placement of none of the document sheets (Sh1) on the document sheet placing portion (21) transitions to placement of any of the document sheets (Sh1), the raising and lowering processing portion (234) moves the document sheet placing portion (21) to a sixth position using the raising and lowering mechanism (4), the sixth position being set in advance.

8. The document sheet conveying device (2) according to any of claims 1 to 3, further comprising a third determination processing portion (233) configured to determine whether or not a quantity of document sheets (Sh1) placed on the document sheet discharge portion (22) reaches a specific quantity set in advance, wherein
in a case where the third determination processing portion (233) determines that the quantity of document sheets (Sh1) placed on the document sheet discharge portion (22) reaches the specific quantity and the first determination processing portion (231) determines that placement of any of the document sheets (Sh1) on the document sheet placing portion (21) transitions to placement of none of the document sheets (Sh1), the raising and lowering processing portion (234) moves the document sheet placing portion (21) to a seventh position using the raising and lowering mechanism (4), the seventh position being set in advance.

9. The document sheet conveying device (2) according to any of claims 1 to 3, further comprising a third determination processing portion (233) configured to determine whether or not a quantity of document sheets (Sh1) placed on the document sheet discharge portion (22) reaches a specific quantity set in advance, wherein
in a case where the third determination processing portion (233) determines that the quantity of document sheets (Sh1) placed on the document sheet discharge portion (22) reaches the specific quantity and the first determination processing portion (231) determines that placement of none of the document sheets (Sh1) on the document sheet placing portion (21) transitions to placement of any of the document sheets (Sh1), the raising and lowering processing portion (234) moves the document sheet placing portion (21) to an eighth position using the raising and lowering mechanism (4), the eighth position being set in advance.

10. An image processing apparatus (1) comprising:
the document sheet conveying device (2) according to any of claims 1 to 3; and
an image reading portion (11) configured to read an image from a document sheet (Sh1) conveyed by the document sheet conveying device (2).

11. A document sheet conveying method of causing one or more processors to execute a first step, a second step, and a third step, the one or more processors being configured to control a document sheet conveying device (2) including a conveying mechanism (3) configured to sequentially convey document sheets (Sh1) placed on a document sheet placing portion (21) to a document sheet discharge portion (22) through an image reading position (P1) at which an image is read from each of the document sheets (Sh1) and a raising and lowering mechanism (4) configured to raise and lower the document sheet placing portion (21), the document sheet discharge portion (22) being provided below the document sheet placing portion (21), wherein
whether or not any of the document sheets (Sh1) is placed on the document sheet placing portion (21) is determined in the first step,
whether or not any of the document sheets (Sh1) is placed on the document sheet discharge portion (22) is determined in the second step, and
raising and lowering operations by the raising and lowering mechanism (4) are controlled in the third step on a basis of results of determinations made in the first step and the second step.
